# EUROPEAN PATENT SPECIFICATION

(11) **EP 1 072 837 B1**
(45) Date of publication and mention of the grant of the patent: **10.09.2003**
(21) Application number: 00123033.3
(22) Date of filing: 26.07.1996
(51) Int. Cl.: F16L 37/084

(54) **Improvements in or relating to tube couplings**
Rohrverbindung
Raccord de tuyaux

(30) Priority: 28.07.1995 GB 9515497; 19.01.1996 GB 9601097
(43) Date of publication of application: 31.01.2001
(62) Divisional of application: 96305487.9
(73) Proprietor: JOHN GUEST LIMITED, West Drayton, Middlesex UB7 8JL (GB)
(72) Inventor: Guest, John Derek, Bray, Maidenhead, Berkshire, SL6 2EX (GB)
(74) Representative: Bayliss, Geoffrey Cyril

(56) References cited:
- EP-A- 0 558 350
- EP-A- 0 597 711
- WO-A-93/20379
- GB-A- 2 258 900
- US-A- 5 219 188
- US-A- 5 228 728

## Description

This invention relates to tube couplings and in particular to tube couplings for use with tubes having a feature such as a flange, projection or groove with which positive engagement is to be made by the coupling. For example, the coupling may be used in the fuel or a brake line of a motor vehicle.

Reference should be made to EP-A-0756125 from which this application is divided.

GB-B-2258900 discloses a tube coupling comprising a coupling body having a throughway open at one end to receive a tube and a collet located in the throughway having an annular element and deformable fingers extending axially from the element towards the open end of the throughway. The coupling body has a stop face directed along the throughway and the distal ends of the fingers have radial abutments to engage the stop face on the throughway and a raised annular abutment on a tube located in the throughway to hold the tube in the throughway.

This invention provides a tube coupling according to claim 1.

Preferably, the annular element of the collet has a cam surface to be engaged by said projection or projections.

A further collet may be provided in the throughway engaged with the aforesaid collet the further collet having a resilient finger or fingers projecting axially along the throughway away from the open end thereof and a tapered cam surface is provided in the throughway reducing towards the open end of the throughway with which the fingers of the further collet are engageable to be compressed with movement of the further collet with the tube towards the open end of the coupling body to cause the collet to grip and lock the tube in the throughway.

In any of the above arrangements the first and further abutments on the distal end of the finger are formed adjacent each other to engage the stop face and the adjacent face of the throughway in the coupling body respectively.

Also is any of the above arrangements the distal end of the finger may have inwardly projecting tooth formation to engage in the feature on a tube to be retained in the coupling body.

The coupling body adjacent said open end of the throughway may be of cylindrical form having a rectangular aperture in its wall for the or each resilient finger on the collet, the side of the aperture adjacent to and facing away from the open end of the coupling body providing said stop face for engagement by the first abutment on the collet finger.

In the latter arrangement a plurality of resilient fingers may be formed on the collet and a corresponding plurality of rectangular apertures are formed in the cylindrical portion of the coupling body.

For example the collet may have four resilient fingers.

The following is a description of some specific embodiments of the invention, reference being made to the accompanying drawings in which:
Figure 1 is a sectional view through a tube coupling including a form of collet for locking a tube in the coupling which is not within the scope of the present invention;
Figure 2 is a view of a similar tube coupling to that shown in Figure 1 with a cover having an integral release sleeve for releasing the collet to allow a tube to be extracted;
Figure 3 shows a modified form of the coupling of Figure 1 having extended collet projecting outside the coupling body to facilitate release of the collet;
Figure 4 shows a similar tube coupling to that of Figure 3 with a sliding cover fitted to the coupling body and engageable with the extended collet to release the collet;
Figure 5 shows a further form of cover for the coupling body having push buttons mounted on the cover for releasing the collet;
Figure 6 is a similar view to that of Figure 3 showing a modified form of coupling body;
Figure 7 is a similar view to that of Figure 3 incorporating a secondary collet;
Figure 8 is a similar view to Figure 4 incorporating a secondary collet;
Figure 9 is a similar view to Figure 5 incorporating a secondary collet; and
Figure 10 is similar view to Figure 1 showing a coupling in accordance with the present invention.
Figure 11 is a plan view of a further form of a coupling body in accordance with the invention;
Figure 12 is a sectional view through the coupling body of Figure 11;
Figure 13 is an end view of a collet for use with the coupling body of Figures 11 and 12;
Figure 14 is a sectional view through the collet of Figure 13;
Figure 15 is a sectional view through the collet showing a stuffer pin inserted in the collet with encircling O-ring seals.

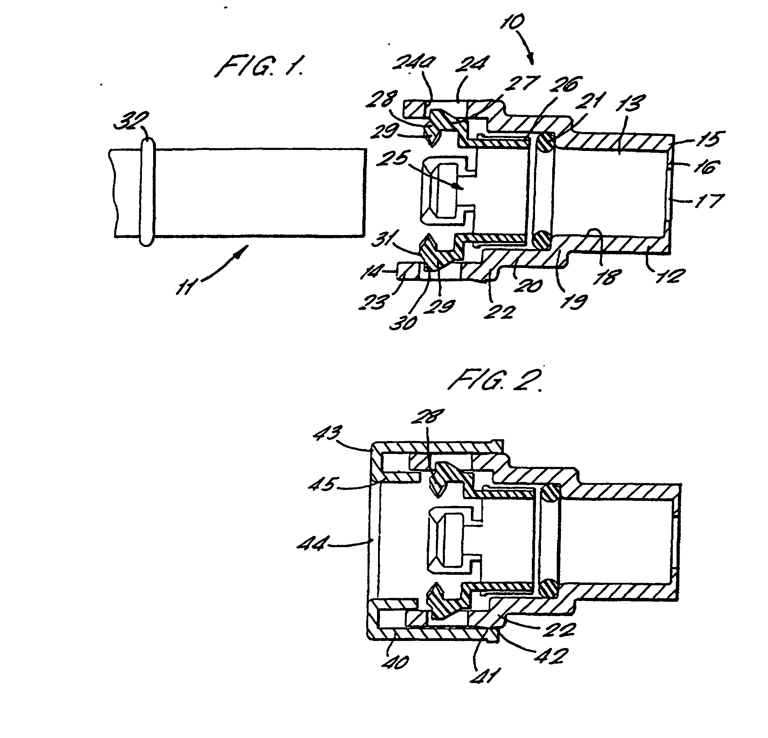

Referring firstly to Figure 1 of the drawings, there is shown a tube coupling indicated generally at 10 for receiving a tube an end part of which is indicated at 11. The coupling forms the subject of EP-A-0756125 from which the present application is divided. The coupling comprises a coupling body 12 through which a throughway 13 extends from one end 14 of the coupling body where the throughway is open to receive the tube 11 to the other end 15 where there is an inturned flange 16 having a central aperture 17 through which fluid can flow.

The internal diameter 18 of the throughway adjacent end 15 of the coupling body is selected to receive the tube 11 with a close fit and the flange 16 forms an end stop for the tube. Halfway along the coupling body, the wall of the body is formed with a step 19 leading to an intermediate portion 20 having enlarged internal diameter and an O-ring seal 21 is lodged against the step to form a seal between the outer surface of the tube 11 and the inner surface of the coupling body.

The intermediate section 20 of the coupling body has a step 22 connecting the intermediate section to a further enlarged end portion 23 of the coupling body in which the open end to the throughway 13 is formed. The enlarged end portion of the coupling body 23 is formed with four rectangular apertures 24 at spaced locations around the wall to receive collet fingers for locking a tube in the coupling body.

A collet is located between the intermediate and enlarged portions of the coupling body indicated generally at 25 and comprising an annular sleeve 26 which locates with clearance in the intermediate section of the coupling body and has four collet fingers 27 equi-spaced around the sleeve which are outwardly cranked or hooked and extend towards the open end of the sleeve. The fingers terminate in heads 28 having inturned teeth 29 to engage an upstanding flange formation on the tube 11 as described below.

The outer sides of the heads 28 of the fingers have upstanding abutments 29 which project into the apertures 24 in the collet wall and are formed with abutment faces 30 facing axially of the throughway towards the open end of the body and are directly opposite side faces of the apertures 24 in the coupling body wall nearest the open end of the body which form stop faces 24a to retain the collet in the coupling body.

Each collet head has a further abutment face 31 at the inner end of face 30 which is angled outwardly with respect to the head to engage the inner surface of the throughway adjacent the aperture 24 and thereby prevent radial outward movement of the heads 28 when the first abutment faces 30 are in engagement with the stop faces 24a provided by the apertures 24.

The tube 11 to be inserted in the coupling body has an encircling integral flange 32 located adjacent the end of the tube. To lock a tube in the coupling body, the tube end is inserted into the open end of the coupling body through the collet and seal 21 into the reduced diameter portion 18 of the throughway until the end of the tube engages the flange 16. In inserting the tube through the collet, the flange 32 eventually engages the teeth 29 and the collet is drawn with the tube until the annular part 26 of the collet engages the annular seal 21. By this time the outwardly facing abutment faces 31 on the heads will have moved opposite the apertures in the collet wall and the heads of the collet can then spring outwardly into the apertures as the teeth snap over the flange 32. When the tube is drawn forward slightly, the collet is drawn with the tube by engagement of the teeth 29 with the flange 32 until the axially directed abutment faces 30 on the collet heads engage the stop faces in the apertures to prevent further movement of the collet with the tube. The flange on the tube is held by the teeth on the collet and the heads of the collet are prevented from expanding outwardly by engagement of the outwardly directed abutment faces 31 on the heads with the wall of the throughway next to the stop faces. The tube is then firmly locked in the coupling body and cannot be removed.

To release the tube from a coupling body, a tool is inserted between the tube and wall of the coupling body to stop the collet coming forward with the tube as the tube is drawn outwardly from the coupling body. The collet heads can then spring apart into the apertures 24 thereby releasing the tube which can then be fully extracted from the coupling body.

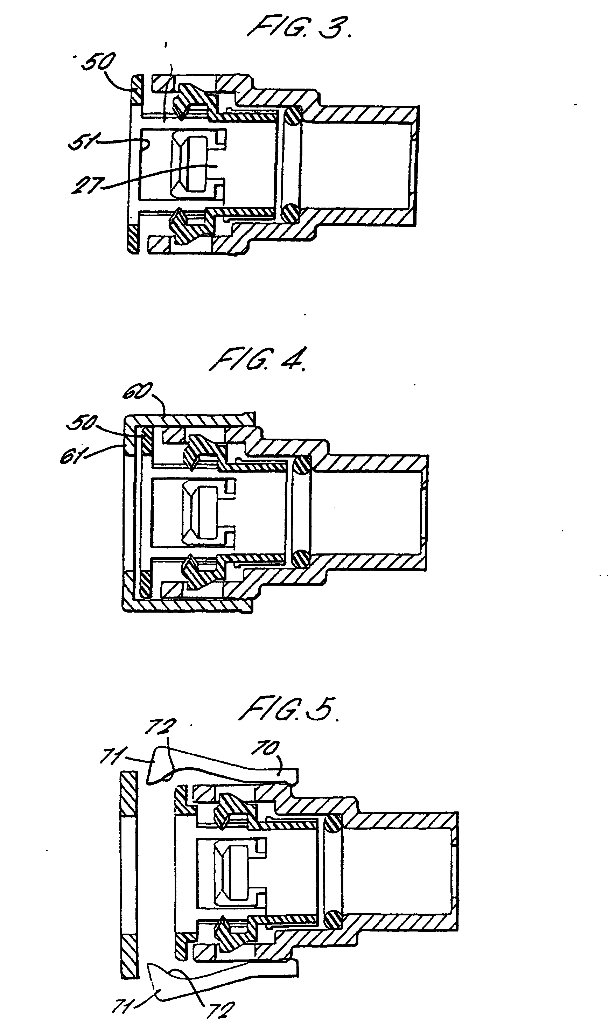

Figure 2 shows a modified form of the coupling body shown in Figure 1 in which a cover 40 is slidably mounted on the enlarged end portion of the coupling body and is retained by an upstanding annular abutment 41 on the coupling body adjacent the step 22 and engageable with an inturned annular rib 42 around the open end of the cover. The other end of the cover is closed by an integral end wall 43 having a central opening 44 and an inturned integral sleeve 45 which projects into the open end of the coupling body to engage the heads 28 of the collet. By depressing the cover towards the coupling body, the sleeve 45 bears on the heads 28 of the collet to disengage the abutment faces 30 on the collet heads from the stop faces 24a on the collet wall sufficiently to allow the heads 28 of the collet to spring outwardly over the flange 32 on the tube as the tube is inserted in or withdrawn from the coupling body. The arrangement is otherwise similar to that described above.

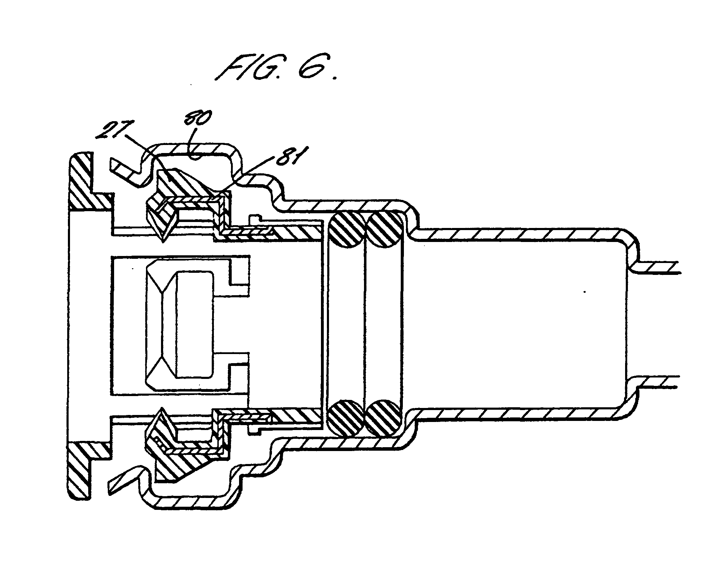

Figure 3 shows a further modification based on the construction of Figure 1 in which the sleeve 26 of the collet is extended to project out of the open end of the coupling body and is formed with an annular out turned head 50 which overlies the end of the coupling body. The collet fingers 27 are formed in rectangular apertures 51 in the sleeve. The position of the collet in the coupling body can be adjusted manually by pushing or pulling the head 50 of the collet towards or away from the end of the coupling body to engage or disengage the heads of the collet with the stop faces on the apertures 24 in the collet wall to lock or release the heads against radial movement as required.

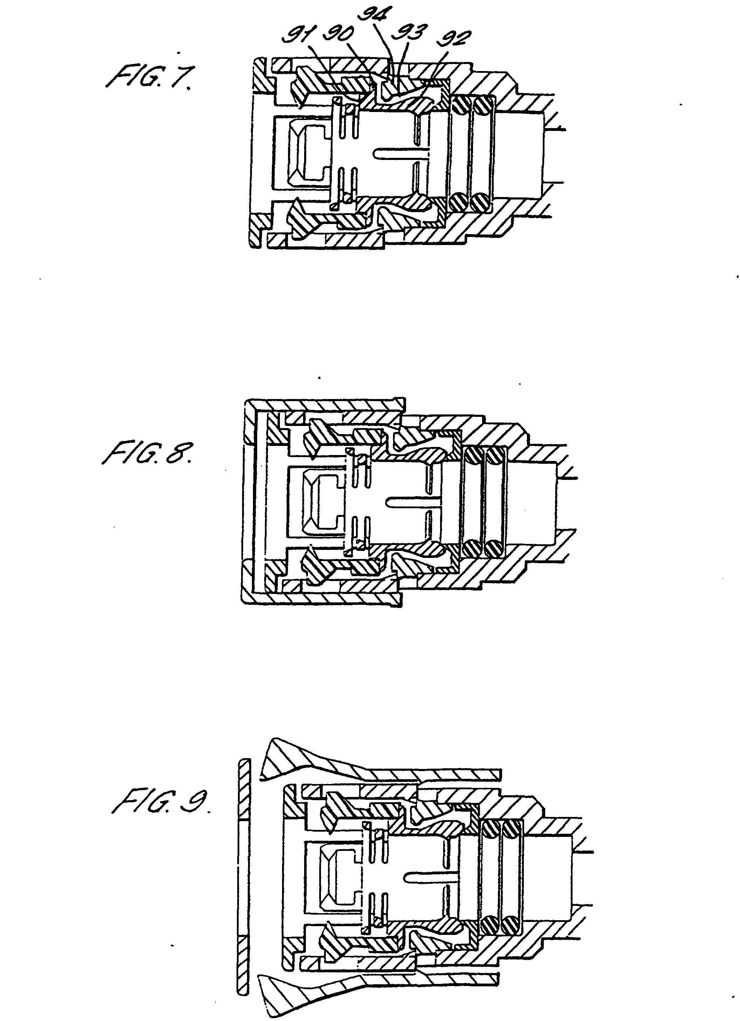

Figure 4 shows a further arrangement which combines the coupling of Figure 3 with a cover 60 slidably mounted on the coupling body in a similar way to the cover 40 of Figure 2. In this case however the inner sleeve 45 of the cover is omitted and engagement of the bottom wall 61 of the cover with the head 50 of the collet is used to displace the collet in the coupling body as required to lock or release the heads of the collet.

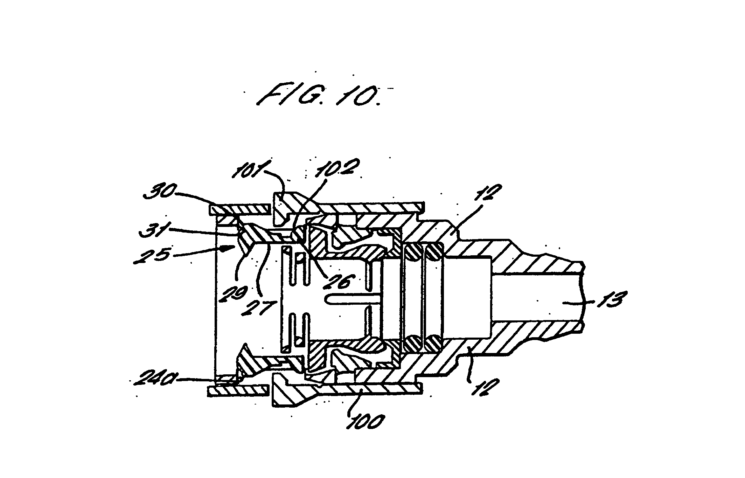

Figure 5 shows a further form of cover 70 mounted on the collet having integral radially movement button 71 which have inclined faces 72 shaped to bear on the head 50 of the collet to drive the collet inwardly with respect of the collet body when the buttons 71 are depressed inwardly. The arrangement otherwise functions in a similar manner to that of the previous figure.

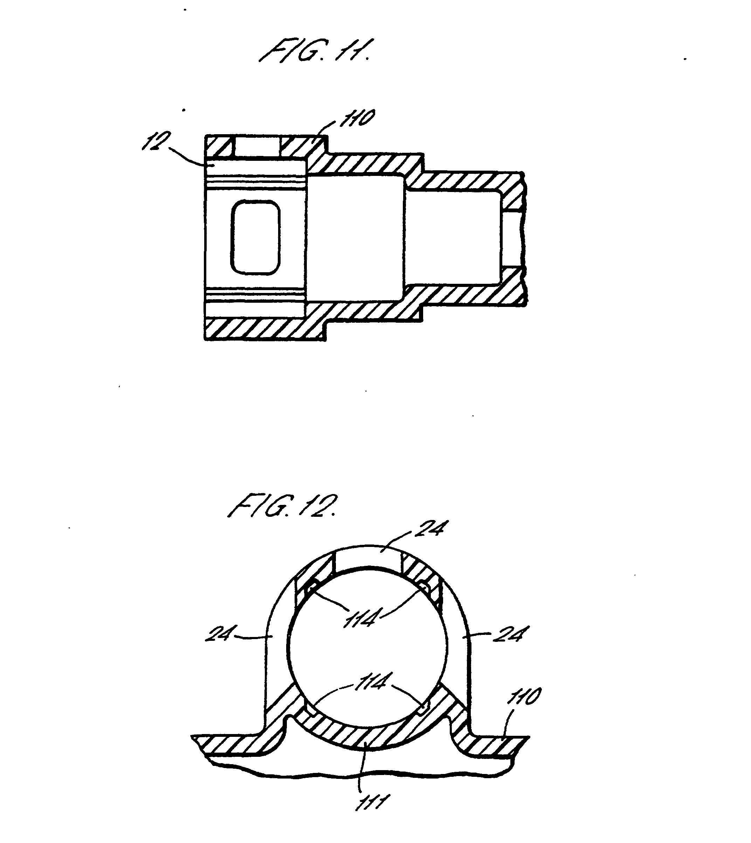

Figure 6 of the drawings shows a similar arrangement to that of Figure 3 except that the collet body is formed with a thin wall in metal and instead of having apertures 24 in which the collet heads 28 are engageable is provided with an annular channel section 80 in the enlarged end portion of the collet body. The collet is formed in plastics as before and has an inner metal skeleton 81 to verify the location of the collet in the coupling body should the plastics material of the coupling body be destroyed by fire or possibly chemical action.

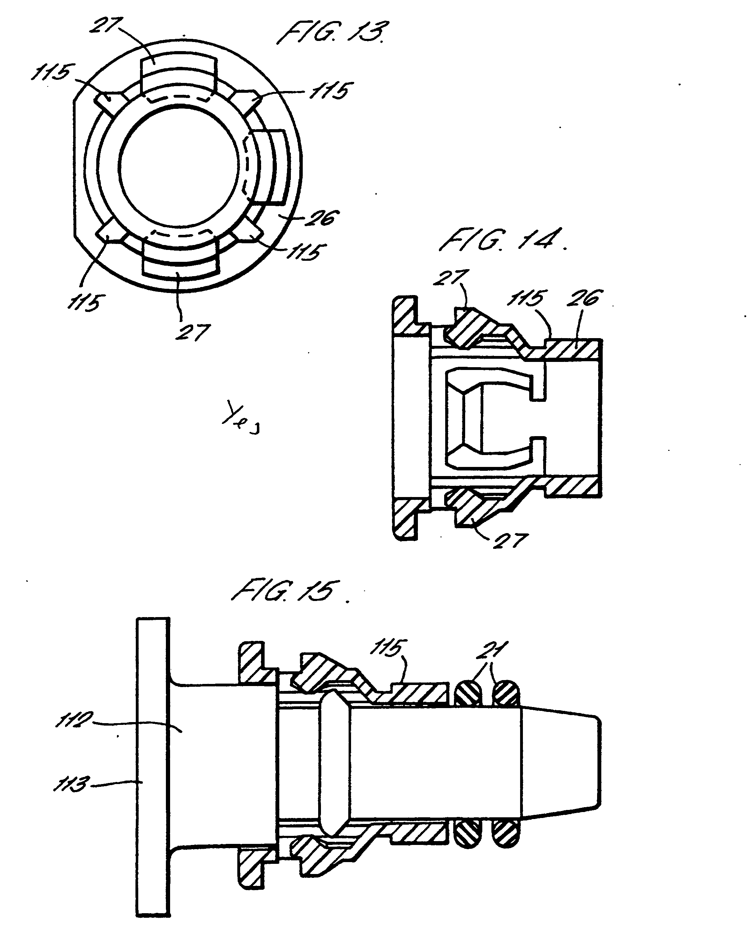

Figure 7 shows a further modification to the arrangement of Figure 3 in which a secondary collet is provided in the coupling body beyond the first collet from the open end of the coupling body. The secondary collet has an annular element 90 formed with a rebate 91 in which the end of the sleeve 26 of the first collet is seated. The secondary collet has resilient fingers 92 projecting from the annular element away from the open end of the coupling body which are engageable with a tapered cam surface 93 formed on an insert sleeve 94 mounted in the coupling body. Engagement of the fingers 92 of the collet with the tapered cam surface forces the fingers inwardly to grip end and engage a tube inserted in the throughway of a coupling body.

When the first or primary collet is depressed into the coupling body to release the heads of the collet, the fingers 92 of the secondary collet 92 will also be released from the tapered cam surface 93 allowing insertion or extraction of a tube to or from the coupling body.

Figure 8 of the drawings shows a modified form of the arrangement shown in Figure 7 in which a cover similar to the cover 40 of Figure 4 is provided. Figure 9 of the drawings shows a similar arrangement to Figure 7 with a cover having radial buttons similar to the button 71 of Figure 5 for releasing the primary and also the secondary collets.

Figure 10 shows an embodiment of the present invention based on the constructions described above in which the extended portion of the sleeve of the primary collet projecting from the open end of the coupling body is omitted. A cylindrical cover 100 is mounted on the coupling body and has integral radially moveable buttons 101 which can act on a cam surface 102 formed on the sleeve of the primary collet to displace the collet axially away from the open end of the coupling body to release the primary and secondary collet for insertion/extraction of a tube from the coupling body.

The collet has four equi-spaced fingers and the coupling body has four rectangular apertures in which the fingers are engageable for locking the tube in the coupling body.

The coupling body of Figures 11 and 12 is formed integrally in a wall 110 of an enclosure with the axis of the coupling body extending parallel to the wall.

The part of the coupling body which forms part of the wall of the enclosure is therefore made solid, as indicated at 111, to prevent loss of fluid from the enclosure. The coupling body has three rectangular apertures 24 at the top and on either side of the coupling body to receive three fingers 27 on the collet the collet is illustrated in Figures 13 and 14 and also in Figure 15. In the latter illustration a stuffer pin 112 is inserted in the collet to project through the collet. The pin provides a useful tool for the assembly of the collet and O-ring seals in the coupling body and to that end, the O-ring seal 21 are assembled on the end of the stuffer pin projecting from the inner end of the collet. The stuffer pin has an elongate integral cross-bar 113 at its other end to facilitate extraction of the pin once the collet/O-ring seal arrangement has been assembled in the coupling body.

The enlarged diameter open end part of the coupling body has four axially extending slots 114 formed on the inner side of the body between the apertures 24 with which four axial splines 115 on the outer side of the collet between the fingers 27 engage to ensure that the collet is correctly aligned in the coupling body with the fingers 27 aligned with the apertures 24.

## Claims

1. A tube coupling comprising a coupling body (12) having a throughway (13) open at one end (14) of the body to receive a tube (11)through that end, a collet (25) located in the throughway having an annular element (26) and at least one radially resilient finger (27) extending axially from the annular element toward said open end (14) of the throughway, the coupling body having an axially facing stop face (24a) directed away from said open end, the distal end of the finger having on its inner radial side a projection (28) to engage a feature (32) on the tube and on its outer radial side a first axially facing abutment (30) directed towards the open end of the throughway to engage with the stop face (24a) and a further abutment (31) engageable with the radial inner side of the coupling body adjacent the stop face when the first axially facing abutment (30) engages the stop face to constrain the distal end of the finger against radial outward movement and thereby prevent release of the projection on the finger from the feature on the tube and prevent release of the tube from the coupling body; **characterised in that** a cover (100) is mounted on the coupling body (12)and has one or more integral radial projections (101) extending through an aperture or apertures in the coupling body to engage and act on the collet to displace axially the collet inwardly of the coupling body and thereby release said further abutment (31) of the resilient finger from the radial inner side of the coupling body adjacent the stop face, thereby allowing withdrawal of the tube.

2. A tube coupling as claimed in claim 1, wherein the annular element of the collet has a cam surface to be engaged by said projection or projections.

3. A tube coupling as claimed in claim 1 or claim 2, **characterised in that** a further collet is provided in the throughway engaged with the aforesaid collet (25) the further collet having a resilient finger or fingers projecting axially along the throughway away from the open end thereof and a tapered cam surface is provided in the throughway reducing towards the open end of the throughway with which the fingers of the further collet are engageable to be compressed with movement of the further collet with the tube towards the open end of the coupling body to cause the collet to grip and lock the tube in the throughway.

4. A tube coupling as claimed in any of claims 1 to 3, **characterised in that** the first (30) and further abutments (31) on the distal end of the finger (27) are formed adjacent each other to engage the stop face (24a) and the adjacent face of the throughway in the coupling body respectively.

5. A tube coupling as claimed in any of claims 1 to 4, **characterised in that** the distal end of the finger (27) has inwardly projecting tooth formation to engage in the feature (32) on a tube (11) to be retained in the coupling body.

6. A tube coupling as claimed in any of the preceding claims, **characterised in that** the coupling body (12) adjacent said open end of the throughway is of cylindrical form (23) having a rectangular aperture (24) in its wall for the or each resilient finger (27) on the collet, the side of the aperture adjacent to and facing away from the open end of the coupling body providing said stop face (24a) for engagement by the first abutment (30) on the collet finger.

7. A tube coupling as claimed in claim 6, **characterised in that** a plurality of resilient fingers (27) are formed on the collet and a corresponding plurality of rectangular apertures (24) are formed in the cylindrical portion (23) of the coupling body (12).

8. A tube coupling as claimed in claim 7, **characterised in that** the collet (25) has four resilient fingers (27).

## Patentansprüche

1. Rohrkupplung mit einem Kupplungskörper (12) mit einem Durchlass (13), der an einem Ende (14) des Körpers offen ist, zur Aufnahme eines Rohres (11) durch das Ende, einem in dem Durchlass angeordneten Klemmring (25) mit einem Ringelement (26) und mindestens einem radial federnden Finger (27), der sich in Axialrichtung von dem Ringelement zu dem offenen Ende (14) des Durchlasses erstreckt, wobei der Kupplungskörper eine radial gerichtete Stopfläche (24a) aufweist, die von dem offenen Ende weggerichtet ist, wobei das distale Ende des Fingers an seiner inneren radialen Seite einen Vorsprung (28) zum Eingriff an einer Ausformung (32) an dem Rohr aufweist und an seiner äußeren radialen Seite einen ersten axial gerichteten Anschlag (30) aufweist, der zum offenen Ende des Durchlasses gerichtet ist, zum Angriff an der Stopfläche (24a) und einen weiteren Anschlag (31), der mit der radialen Innenseite des Kupplungskörpers neben der Stopfläche zum Eingriff bringbar ist, wenn der erste axial gerichtete Anschlag (30) an der Stopfläche anliegt, um das distale Ende des Fingers gegen eine Bewegung radial nach außen zu sperren und hierdurch die Freigabe des Vorsprungs an dem Finger von der Ausformung an dem Rohr zu verhindern und eine Freigabe des Rohres von dem Kupplungskörper zu verhindern, **dadurch gekennzeichnet, dass** eine Hülle (100) an dem Kupplungskörper (12) gelagert ist und einen oder mehrere einstückige radiale Vorsprünge (101) aufweist, die sich durch eine Öffnung oder Öffnungen in dem Kupplungskörper erstrecken, um an dem Klemmring anzuliegen und auf diesen einzuwirken, um den Klemmring innerhalb des Kupplungskörpers axial zu verschieben und dadurch den weiteren Anschlag (31) des federnden Fingers von der radial inneren Seite des Kupplungskörpers neben der Stopfläche zu lösen und dadurch ein Herausziehen des Rohres zu ermöglichen,

2. Rohrkupplung nach Anspruch 1, bei der das Ringelement des Klemmrings eine Nokkenfläche für den Eingriff durch den Vorsprung oder die Vorsprünge aufweist.

3. Rohrkupplung nach Anspruch 1 oder 2, **dadurch gekennzeichnet, dass** ein weiterer Klemmring in dem Durchlass vorgesehen ist, in Anlage an dem zuvor genannten Klemmring (25), wobei der weitere Klemmring einen oder mehrere federnde Finger aufweist, die sich in Längsrichtung des Durchlasses von dessen offenem Ende weggerichtet erstrecken, und eine abgeschrägte Nockenfläche in dem Durchlass vorgesehen ist, die sich in Richtung auf das offene Ende des Durchlasses verengt, mit der die Finger des weiteren Klemmrings in Eingriff bringbar sind, um hier zusammengedrückt zu werden, bei einer Bewegung des weiteren Klemmrings zusammen mit dem Rohr in Richtung auf das offene Ende des Kupplungskörpers, um zu bewirken, dass der Klemmring das Rohr ergreift und in dem Durchlass blockiert.

4. Rohrkupplung nach einem der Ansprüche 1 bis 3,
**dadurch gekennzeichnet, dass** der erste (30) und der weitere Anschlag (31) an dem distalen Ende des Fingers (27) nebeneinander geformt sind, um an der Stopfläche (24) bzw. an der benachbarten Fläche des Durchlasses in dem Kupplungskörper zur Anlage zu kommen.

5. Rohrkupplung nach einem der Ansprüche 1 bis 4, **dadurch gekennzeichnet, dass** das distale Ende des Fingers (27) eine nach innen vorstehende Zahnform aufweist zum Eingriff an der Ausformung (32) eines in dem Kupplungskörper festzuhaltenden Rohres (11).

6. Rohrkupplung nach einem der vorangehenden Ansprüche,
**dadurch gekennzeichnet, dass** der Kupplungskörper (12) nahe dem offenen Ende des Durchlasses von zylindrischer Form (23) ist mit einer rechteckigen Öffnung (24) in seiner Wand für den oder jeden federnden Finger (27) des Klemmrings, wobei die Seite der Öffnung, die dem offenen Ende des Kupplungskörper benachbart und von ihm weggerichtet ist, die Stopfläche (24a) für die Anlage des ersten Anschlags (30) an dem Klemmringfinger bildet.

7. Rohrkupplung nach Anspruch 6, **dadurch gekennzeichnet, dass** eine Anzahl von fehlenden Fingern (27) an dem Klemmring ausgebildet sind und eine entsprechende Anzahl von rechteckigen Öffnungen (24) in dem zylindrischen Teil (23) des Kupplungskörper (12) ausgebildet sind.

8. Rohrkupplung nach Anspruch 7, **dadurch gekennzeichnet, dass** der Klemmring (25) vier federnde Finger (27) aufweist.

## Revendications

1. Accouplement de tube comprenant un corps d'accouplement (12) présentant une route directe (13) ouverte au niveau d'une extrémité (14) du corps afin de recevoir un tube (11) à travers cette extrémité, une pince (25) située dans la route directe présentant un élément annulaire (26) et au moins un doigt élastique radialement (27) sétendant de manière axiale depuis l'élément annulaire vers ladite extrémité ouverte (14) de la route directe, le corps d'accouplement présentant une face de butée faisant face de manière axiale (24a) dirigée hors de ladite extrémité ouverte, l'extrémité distale du doigt présentant sur son côté intérieur radial une saillie (28) pour mettre en prise un élément (32) sur le tube et sur son côté radial extérieur une première butée faisant face de manière axiale (30) dirigée vers l'extrémité ouverte de la route directe pour se mettre en prise avec la face de butée (24a) et une autre butée (31) pouvant être mise en prise avec le côté intérieur radial du corps d'accouplement adjacent à la face de butée quand la premiére butée faisant face de manière axiale (30) met en prise la face de butée pour contraindre l'extrémité distale du doigt contre le mouvement radial vers l'extérieur et ainsi empêcher la libération de la saillie sur le doigt depuis l'élément sur le tube et empêcher la libération du tube depuis le corps d'accouplement ; **caractérisé en ce qu'**un couvercle (100) est monté sur le corps d'accouplement (12) et présente une ou plusieurs saillies radiales intégrées (101) s'étendant à travers une ouverture ou des ouvertures dans le corps d'accouplement afin de mettre en prise et d'agir sur la pince pour déplacer de manière axiale la pince vers l'intérieur du corps d'accouplement et ainsi libérer ladite autre butée (31) du doigt élastique depuis le côté intérieur radial du corps d'accouplement adjacent à la face de butée, permettant ainsi un retrait du tube.

2. Accouplement de tube selon la revendication 1, dans lequel l'élément annulaire de la pince présente une surface de came devant être mise en prise par ladite ou lesdites saillies.

3. Accouplement de tube selon la revendication 1 ou 2, **caractérisé en ce qu'**une autre pince est proposée dans la route directe mise en prise avec la pince susmentionnée (25), l'autre pince présentant un ou des doigts élastiques se mettant en saillie de manière axiale le long de la route directe hors de l'extrémité ouverte de celle-ci et une surface de came tronconique est proposée dans la route directe diminuant vers l'extrémité ouverte de la route directe avec laquelle les doigts de l'autre pince peuvent être mis en prise afin d'être comprimés avec le mouvement de l'autre pince avec le tube vers l'extrémité ouverte du corps d'accouplement pour contraindre la pince à serrer et verrouiller le tube dans la route directe.

4. Accouplement de tube selon l'une quelconque des revendications 1 à 3, **caractérisé en ce que** la première butée (30) et les autres butées (31) sur l'extrémité distale du doigt (27) sont formées adjacentes les unes aux autres afin de mettre en prise la face de butée (24a) et la face adjacente de la route directe dans le corps d'accouplement respectivement.

5. Accouplement de tube selon l'une quelconque des revendications 1 à 4, **caractérisé en ce que** l'extrémité distale du doigt (27) présente une formation de dents en saillie vers l'intérieur pour se mettre en prise dans l'élément (32) sur un tube (11) afin d'être retenu dans le corps d'accouplement.

6. Accouplement de tube selon l'une quelconque des revendications précédentes, **caractérisé en ce que** le corps d'accouplement (12) adjacent à ladite extrémité ouverte de la route directe est de forme cylindrique (23) présentant une ouverture rectangulaire (24) dans sa paroi pour le ou chaque doigt élastique (27) sur la pince, le côté de l'ouverture adjacent à et faisant face hors de l'extrémité ouverte du corps d'accouplement procurant une face de butée (24a) pour une mise en prise par la premiére butée (30) sur le doigt de la pince.

7. Accouplement de tube selon la revendication 6, **caractérisé en ce qu'**une pluralité de doigts élastiques (27) sont formés sur la pince et une pluralité correspondante d'ouvertures rectangulaires (24) sont formées dans la partie cylindrique (23) du corps d'accouplement (12).

8. Accouplement de tube selon la revendication 7, **caractérisé en ce** la pince (25) présente quatre doigts élastiques (27).
